(19) Europäisches Patentamt
European Patent Office
Office européen des brevets

(11) Veröffentlichungsnummer : **0 392 250 B1**

(12) # EUROPÄISCHE PATENTSCHRIFT

(45) Veröffentlichungstag der Patentschrift : **09.06.93 Patentblatt 93/23**

(51) Int. Cl.$^5$ : **A01N 43/80,** A01N 25/30, C09D 5/14

(21) Anmeldenummer : **90105747.1**

(22) Anmeldetag : **26.03.90**

(54) **Flüssiges Konservierungsmittel.**

(30) Priorität : **11.04.89 DE 3911808**

(43) Veröffentlichungstag der Anmeldung : **17.10.90 Patentblatt 90/42**

(45) Bekanntmachung des Hinweises auf die Patenterteilung : **09.06.93 Patentblatt 93/23**

(84) Benannte Vertragsstaaten : **AT BE CH DE DK ES FR GB IT LI NL SE**

(56) Entgegenhaltungen :
**CHEMICAL ABSTRACTS, Band 27, Nr. 26, 26.12.1977 Columbus Ohio, USA K.NISHIZAWA et al. "Antimicrobial agents" Seite 290, Zusammenfassung Nr. 206 525e**
**CHEMICAL ABSTRACTS, Band 87, Nr. 17, 24.10.1977 Columbus, Ohio, USA M.INOUE et al. "Microbicides for industrial products". Seite 217, Zusammenfassung Nr. 128 881b**

(73) Patentinhaber : **RIEDEL-DE HAEN AKTIENGESELLSCHAFT**
**Postfach**
**W-3016 Seelze 1 (DE)**

(72) Erfinder : **Lindner, Wolfgang, Dr.**
**Leinestrasse 3**
**W-3016 Seelze 1 (DE)**
Erfinder : **Neuber, Hans-Ulrich**
**Kleine Heide 52**
**W-3050 Wunstorf 1 (DE)**
Erfinder : **Taschenbrecker, Erich**
**Bordenauer Weg 23**
**W-3050 Wunstorf 2 (DE)**

(74) Vertreter : **Urbach, Hans-Georg, Dr. et al**
**CASSELLA AKTIENGESELLSCHAFT,**
**Patentabteilung, Hanauer Landstrasse 526**
**W-6000 Frankfurt am Main 60 (DE)**

**EP 0 392 250 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein flüssiges, alkalistabiles technisches Konservierungsmittel, das insbesondere zur Konservierung von wäßrigen Kunststoffdispersionen und daraus hergestellten Folgeprodukten geeignet ist.

Kunststoffdispersionen (auch Kunstharzdispersionen, Kunstharz-Latices oder Kunstharz-Emulsionen genannt) enthalten meist 0,01 bis 2,5 μm große Kunstharzteilchen aus z.B. Polyvinylacetat, Polybutylidenchlorid, Polyvinylchlorid, Polyacrylaten oder Styrol-Butadien-Copolymerisaten in Wasser und üblicherweise Zusätze von organischen Lösungsmitteln und Zusatzstoffen. Sie werden z.B. zur Herstellung von Dispersionsfarben, Dispersionsputzen, Klebstoffen, Betonhilfsmitteln, Papierbeschichtungsmassen, Lederfinishes etc. verwendet.

Kunststoffdispersionen und daraus hergestellte Folgeprodukte werden von Mikroorganismen befallen und anschließend mikrobiell zersetzt. Deshalb müssen Kunststoffdispersionen, besonders die heute aus ökotoxischen Gründen begehrten restmonomerenarmen, hochwertigen Dispersionen sowie die daraus hergestellten Folgeprodukte bei der Lagerung vor Verderbnis durch Mikroorganismen geschützt werden. Hierfür steht jedoch noch kein voll befriedigendes Konservierungsmittel zur Verfügung, weil die Kunststoffdispersionen und die daraus hergestellten Folgeprodukte zur Gewährleistung der Kolloidstabilität auf pH-Werte über 8 eingestellt werden und in diesem alkalischen Bereich die meisten der üblicherweise im technischen Bereich eingesetzten Bakterizide durch Hydrolyse abgebaut Werden.

Es ist bereits bekannt, 1,2-Benzisothiazolin-3-on (im folgenden: BIT) zur Konservierung alkalisch einge stellter technischer Produkte zu verwenden. Allerdings weist dieser Wirkstoff ein nicht ausgeglichenes Wirkungsspektrum gegen Bakterien auf. Deshalb wurden bereits Kombinationsprodukte von BIT mit anderen biologisch aktiven Verbindungen zur Konservierung technischer Produkte vorgeschlagen.

Mehrere Vorschläge betreffen die Kombination von BIT mit Formaldehyddepotstoffen. Da sich in wäßriger Lösung aus diesen Formaldehyddepotstoffen eine Gleichgewichtskonzentration freier Formaldehyd abspaltet, ist ihre Anwendung nicht universell möglich. Gegen den Einsatz von Formaldehyd in Kunststoffdispersionen bestehen außerdem toxikologische Bedenken. Zudem können aufgrund der Reaktionsfähigkeit des Formaldehyds mit anderen Bestandteilen der zu schützenden Formulierung Verfärbungen auftreten.

Es ist außerdem bereits bekannt, zur Desinfektion von Oberflächen sogenannte Amphotenside einzusetzen, (vergl. S.S.Block, Disinfection, Sterilization and Preservation, 3.Edition (1983), Kapitel 16, S.335 ff, Verlag Lea + Febiger, Philadelphia). Amphotenside in diesem Sinne sind besonders die unter dem Handelsnamen Tego® bekannten Alkyl(polyaminoalkyl)-glycine, (Tego® ist ein Warenzeichen der Fa. Goldschmidt, Essen). Zur Konservierung von Kunststoffdispersionen, Dispersionsfarben und -klebstoffen sind diese Amphotenside in der biologisch wirksamen Einsatzkonzentration jedoch nicht verwendbar, da es zu Koagulation der Dispersionen kommt.

Die japanische Offenlegungsschrift 52-87230, zitiert in Chemical Abstracts 87 206525e, betrifft antibiotische Komponenten, die in der Weise hergestellt werden, daß Alkyl-poly(aminoethyl)glycin-Salz und BIT oder dessen Salz miteinander so vermischt werden, daß die Menge des ersteren mehr als 0,3mal so viel wie die des letzteren ist. Das Konservierungssystem soll zur Konservierung von Emulsionsanstrichmitteln, Harzemulsionen, Stärkeklei stern, Leimen, Shampoos und Reinigungsmitteln dienen. Das in der japanischen Offenlegungsschrift verwendete Konservierungssystem ist allerdings aufgrund des hohen Amphotensidanteils zumeist nicht mit Kunststoffdispersionen und daraus hergestellten Folgeprodukten verträglich, da es durch Wechselwirkung mit dem Emulgatorsystem zur Koagulation kommt. Zudem läßt sich nach dem angegebenen Herstellbeispiel keine lagerstabile flüssige Formulierung der Wirkstoffe herstellen.

Es besteht somit ein großer Bedarf an einem alkalistabilen, ökotoxisch unbedenklichen Konservierungsmittel mit breitem Wirkungsspektrum für technische Produkte, besonders an solchen, die in alkalischen Kunststoffdispersionen, Dispersionsfarben und -klebstoffen eingesetzt werden können und dort nicht zur Koagulation oder Verdickung führen. Das Konservierungsmittel muß zudem in einer lagerstabilen Formulierung zur Verfügung gestellt werden, da die Einarbeitung der Einzelkomponenten in die zu schützende Dispersion nicht gelingt. Durch die vorliegende Erfindung wird ein derartiges Konservierungsmittel zur Verfügung gestellt.

Die Erfindung betrifft somit ein flüssiges Konservierungsmittel insbesondere für Kunststoffdispersionen und daraus hergestellte Folgeprodukte, enthaltend

a) als Komponente A 1 bis 24,5 Gew.% 1,2-Benzisothiazolin-3-on oder ein Salz dieser Verbindung,

b) als Komponente B 0,1 bis 7 Gew.% eines Alkyl(polyaminoalkyl)glycins der Formel I:

$$R\text{-}(NH\text{-}(CH_2)_n)_m\text{-}NH\text{-}CH_2\text{-}COOH \qquad (I)$$

und/oder der Formel II:

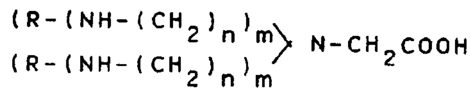

(II)

und/oder der Formel III

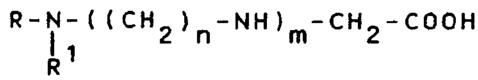

(III)

und/oder ein Salz einer der Verbindungen I, II oder III, gelöst in Wasser oder in mindestens einem mit Wasser mischbaren Lösemittel oder in einem Gemisch aus Wasser und mindestens einem mit Wasser mischbaren Lösemittel, wobei das Gewichtsverhältnis A : B = (3,5 bis 100) : 1 beträgt und

R = $C_8$ bis $C_{18}$-Alkyl,
$R^1$ = $((CH_2)_n\text{-}NH)_m\text{-}(CH_2)_n\text{-}NH_2$,
n = 2 bis 4,
m = 1, 2, 3, 4 oder 5.

bedeuten.

Das erfindungsgemäße Konservierungsmittel enthält als Komponente A BIT oder ein Salz dieser Verbindung. BIT ist kommerziell erhältlich und kann in der gelieferten Form zur Herstellung erfindungsgemäßer Konservierungsmittel eingesetzt werden (z.B. PROXEL®GXL, Handelsprodukt und Warenzeichen der Fa.ICI).

Als Salze des BIT sind vor allem Alkalisalze des BIT, insbesondere das Lithium-, Natrium- oder Kalium-Salz oder Ammoniumsalze des BIT geeignet, wobei das Ammonium unsubstituiert sein kann ($NH_4^+$), oder aber aus einem am Stickstoff positiv geladenen primären, sekundären oder tertiären Amin gebildet sein kann. Derartige Amine besitzen vorzugsweise maximal 6 C-Atome.

Das Lithium- und Natriumsalz des BIT sind bevorzugt.

Die Komponente A kann aus BIT oder einem Salz des BIT oder aus BIT und/oder einem oder mehreren Salzen des BIT bestehen.

In den Formeln I bis III steht R für einen $C_8$ bis $C_{18}$-Alkylrest, vorzugsweise für einen $C_{10}$ bis $C_{14}$-Alkylrest. n bedeutet vorzugsweise 2 oder 3 und m bedeutet vorzugsweise 1 oder 2.

Die Komponente B besteht aus mindestens einer Verbindung der Formeln I, II oder III, kann aber auch aus einem Gemisch verschiedener Verbindungen der Formeln I und/oder II und/oder III bestehen. Als Komponente B werden Verbindungen der Formel I, und dabei insbesondere solche mit n = 3, bevorzugt. Ganz besonders bevorzugt sind als Komponente B Verbindungen der Formel I mit n = 3 und m = 1.

Die Alkyl(polyaminoalkyl)glycine der Formeln I bis III können mit Säuren, beispielsweise Mineralsäuren, wie z.B. Chlorwasserstoff, Bromwasserstoff, Schwefel-, Salpeter-, Phosphor-säure Salze bilden. Die Alkyl(polyaminoalkyl)glycine der Formeln I bis III können als solche oder in ihrer Salzform, z.B. als Hydrochlorid, Hydrobromid, Hydrogensulfat und/oder Hydrogennitrat eingesetzt werden.

Die Alkyl(polyaminoalkyl)glycine der Formeln I, II oder III und ihre Salze sind bekannt und sind unter verschiedenen Handelsnamen (z.B. Tego® und Tegol®, beide sind Warenzeichen der Fa. Goldschmidt, Essen) in Form wäßriger Lösungen im Handel, wobei die Handelsprodukte Gemische verschiedener Verbindungen der Formeln I und/oder II und/oder III darstellen können.

In dem erfindungsgemäßen flüssigen Konservierungsmittel beträgt das Gewichtsverhältnis zwischen den Komponenten A:B = (3,5 bis 100) : 1, vorzugsweise (3,8 bis 10) : 1.

Vorzugsweise enthält das erfindungsgemäße flüssige Konservierungsmittel 4 bis 20 Gew.% der Komponente A und 0,6 bis 5,3 Gew.% der Komponente B, wobei ganz besonders bevorzugt das Gewichtsverhältnis A:B = (3,8 bis 10) : 1 beträgt.

In dem erfindungsgemäßen flüssigen Konservierungsmittel sind die Komponenten A und B normalerweise in einem Gemisch aus Wasser und einem oder mehreren mit Wasser mischbaren Lösemitteln gelöst. Sie können jedoch auch in einem organischen Lösemittel oder Lösemittelgemisch oder, falls der Gehalt der Komponente A nicht zu hoch ist, auch nur in Wasser gelöst sein.

Geeignete mit Wasser mischbare Lösemittel finden sich z.B. in den Reihen der Alkohole; Ketone; Ether; Glykole; Di- und Polyglykole; Polyethylenglykol-polypropylenglykolkondensaten; Ether und Ester von Glykolen, Di- und Polyglykolen, Polyethylenglykol-polypropylenglykolkondensaten.

Geeignete Alkohole sind z.B. Methanol, Ethanol, Propanol, iso-Propanol, tert. Butanol. Geeignete Ketone sind z.B. Aceton, Methyl-ethyl-keton. Ein geeigneter Ether ist z.B. Methoxybutanol.

Als wassermischbare Lösemittel kommen in erster Linie glykolische Lösemittel, d.h. Glykole, deren Ether und Ester zum Einsatz, insbesondere solche der Formel IV

$$R^2 - X - R^3 \qquad (IV)$$

worin

X den Rest der Formel

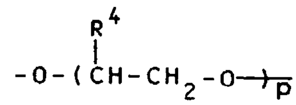

oder

den über zwei Sauerstoffatome gebundenen Rest eines Polyethylenglykol-polypropylenglykolkondensats,

$R^2$, $R^3$ unabhängig voneinander Wasserstoff, $C_1$-$C_{18}$-Alkyl, den Acylrest einer $C_1$-$C_4$-Carbonsäure oder ($C_1$-$C_{10}$)Alkyl-phenyl,

$R^4$ Wasserstoff oder Methyl,

p eine Zahl von 1 bis 13, vorzugsweise 1 bis 10, bedeuten.

Beispiele für geeignete Verbindungen der Formel IV sind: Ethylenglykol, Diethylenglykol, (=Diglykol), Triethylenglykol, Tetraethylenglykol, Polyethylenglykol mit einer Molmasse bis 600, Propylenglykol, Dipropylenglykol, Tripropylenglykol, Polypropylenglykole, Mono-methyl-, -ethyl-, propyl-, -i-propyl- und -butyl-ether des Ethylenglykols, Diethylenglykols, Propylenglykols und Dipropylenglykols, wie z.B. Methyl-glykol (=Ethylenglykolmonomethylether), Ethyl-glykol, Propyl-glykol, Butylglykol, Methyl-diglykol (Diethylenglykol-monomethylether), Ethyl-diglykol, Butyl-diglykol; Di-($C_1$ bis $C_4$)-alkyl-ether des Ethylenglykols, Propylenglykols, Diethylenglykols, Dipropylenglykols, wie z.B. Dimethyl-diglykol (=Diethylenglykol-dimethylether), Diethyldiglykol, Dibutyl-diglykol, Polyethylenglykoldimethylether 250, Nonylphenoxypolyethoxyethanol, Fettsäurealkyloxypolyethoxyethanol.

Weitere Beispiele für geeignete Verbindungen der allgemeinen Formel IV sind Ester von Ethylenglykol, Diethylenglykol, Propylenglykol, Dipropylenglykol, von ($C_1$ bis $C_4$)-Monoalkylethern des Ethylenglykols, Diethylenglykols, Propylenglykols, Dipropylenglykol mit einer $C_1$ bis $C_4$ Carbonsäure. Die Carbonsäure kann dabei geradkettig oder verzweigt und/oder gesättigt oder ungesättigt sein. Die Carbonsäure ist vorzugsweise Essigsäure. Als Beispiele seien genannt: Ethylenglykol-monoacetat, Propylenglykol-monoacetat, Diethylenglykol-monoacetat, Dipropylenglykol-monoacetat, Ethylenglykol-diacetat, Propylenglykoldiacetat, Diethylenglykol-diacetat, Dipropylenglykoldiacetat, Ethyl-diglykol-acetat, Butyl-diglykol-acetat, Ethyl-dipropylenglykol-acetat, Butyldipropylenglykolacetat.

Normalerweise werden von den glykolischen Lösungsmitteln Ethylenglykol, Diethylenglykol oder Polyethylenglykol oder deren Mono- oder Dialkylether, oder Propylenglykol, Dipropylenglykol oder Polypropylenglykol oder deren Mono- oder Dialkylether oder die entsprechenden Niederalkylester verwendet, wobei Alkyl jeweils Methyl, Ethyl, n-Propyl, iso-Propyl oder Butyl bedeutet.

Bevorzugt wird Ethylenglykol, Propylenglykol, Methyldiglykol, Butyldiglykol, Dipropylenglykol, Diethylenglykol, Polyethylenglykol (Molmasse 300 bis 600).

Als mit Wasser mischbare Lösemittel sind auch solche geeignet, die eine oder mehrere Aminogruppen im Molekül enthalten, sofern sie in den zu konservierenden Dispersionen keine Verfärbung hervorrufen. Geeignet ist zum Beispiel das 2-Amino-methylpropanol-1.

Der pH-Wert des erfindungsgemäßen Konservierungsmittels ist vorzugsweise alkalisch, und zwar insbesondere auf pH 8 bis 13,5 eingestellt und beträgt ganz besonders bevorzugt 9 bis 10,5. Die Einstellung des alkalischen pH-Wertes erfolgt durch Zusatz geeigneter anorganischer oder organischer Basen. Geeignete anorganische Basen sind z.B. Alkalihydroxide, insbesondere Lithium-, Natriumoder Kaliumhydroxid, ferner Ammoniak. Geeignete organische Basen sind z.B. aliphatische primäre, sekundäre und tertiäre Amine, wie z.B. Triethyl-, Di-n-Propyl-, Tri-n-Propyl-, n-Butyl-, n-Pentyl-, n-Hexyl-amin; ferner Di- und Polyamine, wie z.B. Ethylendiamin, Trimethylendiamin, Tetramethylendiamin, Pentamethylendiamin, Hexamethylendiamin; ferner Alkanolamine, wie z.B. Ethanolamin, Diethanolamin, Triethanolamin.

Es können jedoch nur solche Amine verwendet werden, die mit den zu schützenden Dispersionen oder den Folgeprodukten verträglich sind, insbesondere bei ihnen keine Verfärbungen hervorrufen.

Die vorstehend genannten Amine können auch in Positiv geladener Form als Kationen des BIT der Komponente A auftreten.

Zur Einstellung des alkalischen pH-Wertes in dem erfindungsgemäßen flüssigen Konservierungsmittel können die vorgenannten Basen einzeln oder auch im Gemisch miteinander, als solche oder in Form von Lösungen, insbesondere wäßrigen Lösungen, eingesetzt werden. Zur Einstellung eines PH-Wertes von 8 bis 13,5 werden normalerweise 2 bis 6 Gew.% Alkalihydroxid, bezogen auf das fertige Konservierungsmittel, benötigt.

Zur Herstellung des erfindungsgemäßen Konservierungsmittels werden die Komponenten A und B, vorzugsweise in Form ihrer Handelsprodukte, in Wasser, oder in einem mit Wasser mischbaren Lösemittel oder Lösemittelgemisch, gegebenenfalls unter Zusatz von Wasser, miteinander vermischt, was z.B. durch Rühren erfolgen kann. Zur Beschleunigung der Auflösung des BIT kann es zweckmäßig sein, das Vermischen bei erhöhter Temperatur, von z.B. bis 60°C, durchzuführen. Bei der Vermischung werden die Komponenten A und B mit Wasser und/oder dem Lösemittel oder Lösemittelgemisch in einem solchen Gewichtsverhältnis gemischt, daß in dem fertigen Konservierungsmittel die bereits genannten Gewichtsprozente und Gewichtsverhältnisse für die Komponenten A und B erhalten werden.

Bei der Herstellung wird auch zur Einstellung des alkalischen pH-Wertes die Base oder das Basengemisch in Substanzform oder in Form einer Lösung zugesetzt.

Gegebenenfalls können bei der Herstellung auch noch ein oder mehrere weitere Bestandteile, so z.B. ein oder mehrere Netzmittel oder nichtionische Tenside und/oder ein oder mehrere mit Wasser mischbare Verdickungsmittel, wie z.B. Maleinsäurecopolymere, und/oder ein oder mehrere weitere biozid wirksame Verbindungen zugesetzt werden.

Die erfindungsgemäßen Konservierungsmittel sind alkalistabil und dienen zur Verhinderung des Wachstums von Mikroorganismen in technischen Produkten, insbesondere in alkalisch eingestellten technischen Produkten. Zur Konservierung von sauer, neutral oder alkalisch eingestellten technischen Produkten, insbesondere von wäßrigen Kunststoffdispersionen, sowie von wäßrigen Zubereitungen von Kunststoffdispersionen, wie z.B. Dispersionsfarben, -putzen, -klebstoffen, Betonhilfsmitteln, Papierbeschichtungsmassen, Lederfinishes usw., wird ein erfindungsgemäßes Konservierungsmittel dem zu schützenden Produkt zugesetzt.

Die erfindungsgemäßen Konservierungsmittel können ebenso zum Schutz von nativen Produkten, wie z.B. Stärke-, Caseinleime, Gelatine, Cellulose etc. dienen. Ebenso können sie eingesetzt werden zur Konservierung von Tensidlösungen, Ölemulsionen, Wachsemulsionen und dergleichen.

Überraschenderweise sind die erfindungsgemäßen Konservierungsmittel besser gegen Schimmelpilze und Bakterien wirksam als aus der Summe der Aktivität der Einzelkomponenten zu erwarten war. D.h. die erfindungsgemäßen Konservierungsmittel besitzen eine synergistisch gesteigerte Wirksamkeit. Außerdem bewirken sie überraschenderweise beim Zusatz zu alkalisch eingestellten technischen Produkten keine Ausfällungen. Sie lassen sich in Kunststoffdispersionen, sogar vom Reinacrylat- oder Styrolacrylat-Typ sowie deren Copolymeren einarbeiten, ohne daß es zu Koagulation der Dispersionen kommt. Aufgrund ihrer Verträglichkeit können sie somit besonders wirksam zur Konservierung von wäßrigen Kunststoffdispersionen und Folgeprodukten eingesetzt werden.

Als wäßrige Kunststoffdispersionen, die mit den erfindungsgemäßen Konservierungsmitteln konserviert werden können, eignen sich grundsätzlich alle Dispersionen, die durch Polymerisation oder Copolymerisation von $\alpha,\beta$-ungesättigten Verbindungen in wäßriger Phase hergestellt worden sind, und die daraus hergestellten Folgeprodukte.

Die Dispersionen bzw. die daraus hergestellten Folgeprodukte können Zusatzstoffe, wie Füllstoffe, Verdicker, Weichmacher, Korrosionsinhibitoren, Pigmente, Entschäumer und andere Stoffe in den üblichen Mengen enthalten.

Der Zusatz des erfindungsgemäßen Konservierungsmittels kann zu jeder Zeit des Herstellungprozesses des zu schützenden technischen Produkts erfolgen. Besonders zweckmäßig ist es, das Konservierungsmittel unmittelbar nach der Herstellung des technischen Produkts zuzusetzen, wobei eine gleichmäßige Verteilung durch Rühren zu gewährleisten ist. Man kann aber auch die erfindungsgemäßen Konservierungsmittel mit einem zur Herstellung des technischen Produkts ohnehin zugesetzten Hilfstoffes gemischt zugeben.

Zur Konservierung wird in die zu schützenden technischen Produkte ein erfindungsgemäßes Konservierungsmittel in einer Konzentration von 0,002 bis 0,11 Gew.%, vorzugsweise von 0,006 bis 0,065 Gew.%, (jeweils bezogen auf die Summe der Aktivsubstanzen A und B) eingearbeitet.

Besonders bevorzugte erfindungsgemäße Konservierungsmittel enthalten 5 bis 15 Gew.% der Komponente A, 1 bis 3,9 Gew.% der Komponente B, wobei das Gewichtsverhältnis der Komponenten A : B = (3,8 bis 10) : 1 beträgt, und 65 bis 75 Gew.% eines glykolischen Lösungsmittels, insbesondere Ethylenglykol, 5 bis 20 Gew.% Wasser und eine Base, die den pH-Wert auf 9 bis 10,5 einstellt.

Die vorliegende Erfindung wird durch folgende Beispiele weiter erläutert, wobei Teile und Prozentgehalte durch Gewichtsteile und Gewichtsprozente ausgedrückt sind.

Beispiel 1:

124,5 g eines wasserfeuchten Preßkuchens von rohem 1,2-Benzisothiazolin-3-on (BIT) (Gehalt 75 %, Rest

Wasser) werden unter Rühren in eine Mischung von 100 g Tegol® 2000 (24 % Dodecylaminopropylglycin-hydrochlorid, Rest Wasser), 83 g Natronlauge (32 %) und 692,5 g Ethylenglykol eingetragen. Man rührt bei 50°C bis eine klare Lösung vorliegt. Man erhält eine lagerstabile Zubereitung mit 9,3 % 1,2-Benzisothiazolin-3-on, 2,1 % 1-Dodecylaminopropylglyzin, 69 % Ethylenglykol, 2,4% Natriumhydroxid, 0,4% Natriumchlorid, Rest Wasser.

Die Formulierung hat einen pH-Wert von 9,8 und ist lagerstabil. Dies wurde geprüft bei Raumtemperatur, bei -5°C und bei 50°C.

In analoger Weise wie in Beispiel 1 lassen sich erfindungsgemäße Zubereitungen der nachfolgenden Beispiele 2 bis 8 herstellen. Diese Beispiele haben die gleiche Lagerstabilität wie Beispiel 1.

Beispiel 2

Rezeptur:
108,1 g BIT (Gehalt 86%, Rest Wasser)
200,1 g Tego® 103 S
38,0 g Kaliumhydroxid (Pastillen)
600,0 g 1,2-Propylenglykol
54,0 g Wasser

Zusammensetzung des Konservierungsmittels:

9,3 % 1,2-Benzisothiazolin-3-on, 1,6 % 1-Dodecyl-1,4,7-triazaoctan-8-carbonsäure, 0,2 % N,N-Didodecyl-3-carboxymethyl-3-azapentylen-1,5-diamin, 60 % 1,2-Propylenglykol, 3,5 % Kaliumhydroxid, 0,4 % Kaliumchlorid, Rest Wasser; pH-Wert: 12,9.

Beispiel 3

Rezeptur:
116,3 g BIT (Gehalt 86%, Rest Wasser)
200,0 g Tego® 103 G
29,1 g Natriumhydroxid (Pastillen)
600,0 g 1,2-Propylenglykol
54,6 g Wasser

Zusammensetzung des Konservierungsmittels:

10,0 % 1,2-Benzisothiazolin-3-on, 1,6 % 1-$C_{10}$ bis $C_{14}$-Alkyl-1,4,7-triazaoctan-8-carbonsäure, 0,2 % N,N-Di-$C_{10}$ bis $C_{14}$-alkyl-3-carboxymethyl-3-azapentylen-1,5-diamin, 60 % 1,2-Propylenglykol, 0,3% Natriumchlorid, 2,7% Natriumhydroxid, Rest Wasser; pH-Wert: 12,8.

Beispiel 4

Rezeptur:
24,7 g BIT (Gehalt 73%, Rest Wasser)
9,9 g Tego® 103 G
5,4 g Natriumhydroxid (Pastillen)
60,0 g Dipropylenglykol

Zusammensetzung des Konservierungsmittels:

18 % 1,2-Benzisothiazolin-3-on, 0,8 % 1-$C_{10}$ bis $C_{14}$-Alkyl-1,4,7-triazaoctan-8-carbonsäure, 0,1 % N,N-Di-$C_{10}$ bis $C_{14}$-alkyl-3-carboxymethyl-3-azapentylen-1,5-diamin 60 % Dipropylenglykol, 0,1% Natriumchlorid, 5,4 % Natriumhydroxid, Rest Wasser; pH-Wert: 12,5.

Beispiel 5

Rezeptur:
10,8 g BIT (Gehalt 86%, Rest Wasser)

11,7 g einer wässrigen Lösung mit 20% $C_{10}$-$C_4$-Alkyl-1,5-diazahexan-6-carbonsäure als Hydrochlorid
8,5 g Natronlauge (32%)
69,0 g Methyldiglykol

Zusammensetzung des Konservierungsmittels:

9,3 % 1,2-Benzisothiazolin-3-on, 2,1 % 1-$C_{10}$ bis $C_{14}$-Alkyl-1,5-diazahexan-6-carbonsäure, 69 % Methyldiglykol, 0,4 % Natriumhydroxyd, 2,4 % Natriumchlorid, Rest Wasser; pH-Wert: 11,0.

Beispiel 6

Rezeptur:
248,0 g BIT (Gehalt 75%, Rest Wasser)
142,6 g einer wässrigen Lösung mit 20 % 1-Dodecyl-1,5,9-trizadecan-10-carbonsäure als Hydrochlorid
169,2 g Natronlauge (32%)
1200,0 g 1,2-Propylenglykol
240,2 g Wasser
Zusammensetzung des Konservierungsmittels:
9,3 % 1,2-Benzisothiazolin-3-on, 1,3 % 5-Dodecyl-1,5,9-triazadecan-10-carbonsäure, 60 % 1,2-Propylenglykol, 0,2 % Natriumchlorid, 2.6 % Natriumhydroxid, Rest Wasser; pH-Wert: 10,5.

Beispiel 7

Rezeptur:
140,0 g BIT (Gehalt 75%, Rest Wasser)
124,3 Tego® g 103 S
30,6 g Natriumhydroxid (Pastillen)
333,1 g 2-Amino-2-methylpropanol-1 (Gehalt 90%, Rest Wasser)
372,0 g Wasser

Zusammensetzung des Konservierungsmittels:

10,5 % 1,2-Benzisothiazolin-3-on, 1,0 % 1-Dodecyl-1,4,7-triazaoctan-8-carbonsäure, 0,1 % N,N-Didodecyl-3-carboxymethyl-3-azapentylen-1,5-diamin, 30 % 2-Amino-2-methylpropanol-1, 0,2 % Natriumchlorid 2,9 % Natriumhydroxid, Rest Wasser; pH-Wert: 12,9.

Beispiel 8:

Rezeptur:
20,0 g BIT (Gehalt 75%, Rest Wasser)
14,7 g TEGOL® 2000
14,9 g Natronlauge (32%)
950,4 g Wasser

Zusammensetzung des Konservierungsmittels:

1,5 % 1,2-Benzisothiazolin-3-on
0,26% 1-Dodecyl-1,5-diazahexan-6-carbonsäure
0,5% Natriumhydroxid
Rest Wasser; pH-Wert: 11,7.

Beispiel 9

Dieses Beispiel zeigt die Verträglichkeit der erfindungsgemäßen Konservierungsmittel mit einer Styrolacrylat-Kunststoffdispersion.

Die Verträglichkeit eines Konservierungsmittels mit einer Kunststoffdispersion wird wie folgt ermittelt: 2 g des Konservierungsmittels werden in 100 g Wasser und 1 g Ammoniaklösung (25 %) gelöst. Diese Lösung wird mit 100 g der Kunststoffdispersion homogen verrührt. Man läßt in einem geschlossenen Gefäß zwei Tage

bei 25°C stehen. Dann wird jeweils hintereinander durch ein Sieb mit 0,08 und 0,056 mm Maschenweite dekantiert. Die klargesiebte Lösung wird nochmals 3 Tage bei 50°C in einem geschlossenen Gefäß gelagert, und anschließend wird der Siebvorgang wiederholt. Bonitiert wird jeweils die Menge des Siebrückstands im Vergleich zu einer Blindprobe ohne Konservierungsmittel.

Die Verträglichkeit ist in der folgenden Tabelle zusammengefaßt: Die erfindungsgemäßen Konservierungsmittel geben unter den Meßbedingungen keine Koagulation der Dispersion.

| Konservierungsmittel | Menge der grobteiligen Anteile | | | |
|---|---|---|---|---|
| | nach 2 Tagen | | nach 5 Tagen | |
| | Sieb 0,08 mm | Sieb 0,056 mm | Sieb 0,08 mm | Sieb 0,056 mm |
| gemäß Beispiel 1 | <0,1 g | <0,1 g | <0,1 g | <0,1 g |
| gemäß Beispiel 2 | <0,1 g | <0,1 g | <0,1 g | <0,1 g |
| gemäß Beispiel 4 | <0,1 g | <0,1 g | <0,1 g | <0,1 g |
| Vergleichsbeispiel (Tego® 103 G) | >1 g | >1 g | nicht gemessen | |
| Blindprobe (ohne Konservierungsmittel) | <0,1 g | <0,1 g | <0,1 g | <0,1 g |

Beispiel 10

In analoger Weise wie in Beispiel 9 wird die Verträglichkeit der erfindungsgemäßen Konservierungsmittel mit einer Reinacrylatdispersion Mowilith® DM 772 (Fa. Hoechst) (pH Wert 8,8) geprüft.

| Konservierungsmittel | Menge der grobteiligen Anteile | | | |
|---|---|---|---|---|
| | nach 2 Tagen | | nach 5 Tagen | |
| | Sieb 0,08 mm | Sieb 0,056 mm | Sieb 0,08 mm | Sieb 0,056 mm |
| gemäß Beispiel 1 | <0,1 g | <0,1 g | <0,1 g | <0,1 g |
| gemäß Beispiel 2 | <0,1 g | <0,1 g | <0,1 g | <0,1 g |
| gemäß Beispiel 4 | <0,1 g | <0,1 g | <0,1 g | <0,1 g |
| Vergleichsbeispiel (Tegol® 2000) | >1 g | >1 g | nicht gemessen | |
| Vergleichsbeispiel (Ausführungsbeispiel 1 aus JP 52/87230 15% Proxel® CRL (5%BIT) 60% Tego® 51 (18% Amphotensid) Rest Wasser) | >1 g | >1 g | nicht gemessen | |
| Blindprobe (ohne Konservierungsmittel) | <0,1 g | <0,1 g | <0,1 g | <0,1 g |

Beispiel 11:

Dieses Beispiel zeigt die Verträglichkeit der erfindungsgemäßen Konservierungsmittel mit einer Dispersionsfarbe. Als Testfarbe dient eine im Handel erhältliche Wandfarbe. 0,5 g des zu prüfenden Konservierungsmittels wird durch Rühren homogen in 99,5 g der Dispersionsfarbe verteilt. Die Farbe wird dann verschlossen 4 Wochen bei 40°C gelagert. Zur Auswertung wird die Viskosität der Farbe zu Beginn und nach Beendigung der Lagerung gemessen. Durch Zusatz des Konservierungsmittels darf keine Veränderung der Viskosität (z.B. Verdickung) der Dispersionsfarbe eintreten oder eine Koagulation erkennbar sein.

| Konservierungsmittel | Viskosität | | Koagulation |
|---|---|---|---|
| | Anfangswert | nach 4 Wochen | |
| gemäß Beispiel 1 | $15 \cdot 10^3$ mPa·s | $15 \cdot 10^3$ mPa·s | nein |
| gemäß Beispiel 4 | $15 \cdot 10^3$ mPa·s | $15 \cdot 10^3$ mPa·s | nein |
| Vergleichsbeispiel (Tegol® 2000) | $15 \cdot 10^3$ mPa·s | $>50 \cdot 10^3$ mPa·s | ja |
| Blindprobe (ohne Konservierungsmittel) | $15 \cdot 10^3$ mPa·s | $15 \cdot 10^3$ mPa·s | nein |

Beispiel 12:

Dieses Beispiel belegt die synergistische Wirkungssteigerung eines erfindungsgemäßen Konservierungsmittels.

Die vergleichende Prüfung der minimalen Hemmkonzentration (MHK-Werte) erfolgt im Reihenverdünnungstest unter Verwendung einer Standard-I-Nährbouillon, die mit $10^3$ Bakterien pro ml versetzt ist. Nach einer Bebrütung bei 37°C erfolgt nach 48 Stunden die Ablesung der MHK-Werte in % bezogen auf die eingesetzten Zubereitungen mit jeweils 11,8% Aktivsubstanzgehalt. Als MHK-Wert wird jene Konzentration festgelegt, bei

der keine Trübung der Bouillon festgestellt werden kann.

Es werden folgende Werte erhalten:

| Konservierungsmittel | MHK-Wert Escherichia coli | MHK-Wert Pseudomonas aeruginosa DSM |
|---|---|---|
| Gemäß Beispiel 3 (10,0% BIT 1,6% 1-$C_{10}$-$C_{14}$-Alkyl-1,4,7-triazaoctan-8-carbonsäure 0,2% N,N-$C_{10}$-$C_{14}$-Alkyl-3-carboxymethyl-3-azapentylen-1,5-diamin) | 0,020 % | 0,050 % |
| Vergleichsbeispiel (10,5% 1-$C_{10}$-$C_{14}$-Alkyl-1,4,7-triazaoctan-8-carbonsäure 1,3% N,N-$C_{10}$-$C_{14}$-Alkyl-3-carboxymethyl-3-azapentylen-1,5-diamin Rest Wasser, Salzsäure) | 0,040 % | 0,080 % |
| Vergleichsbeispiel (11,8% BIT 73 % Dipropylenglykol Rest Wasser, Natriumhydroxid) | 0,030 % | 0,100 % |

Beispiel 13:

Dieses Beispiel zeigt die Wirksamkeit eines erfindungsgemäßen Konservierungsmittels zur Konservierung einer Styrolacrylatdispersion Mowilith® LDM 7770 (Fa. Hoechst) (pH-Wert 8,8).

Bei dem modifizierten Konservierungsbelastungstest (vergleiche K.H. Wallhäußer, W. Fink; Farbe + Lack, 91. Jahrgang (1985) S. 277ff/397ff) werden ca. $10^5$ Testkeime in die zu prüfende Dispersion eingerührt. Als Testkeime dienen Subkulturen aus verdorbener Dispersionsfarbe und Pseudomonas aeruginosa DSM. Nach einer Einwirkzeit von 7 Tagen wird die Zahl der überlebenden Keime nach Ausstreichen von 0,2 g der Dispersion auf einer Nährbodengußplatte und 3-tägiger Bebrütung festgestellt. Die Beimpfung wird nach 8 Tagen wiederholt, wenn kein oder nur geringes Mikrobenwachstum in der Probe festgestellt wird. Der Impfzyklus wird dreimal wiederholt.

Die Bewertung des Wachstums auf der Nährbodengußplatte erfolgt in einer Skala von 0 bis 4 nach folgendem Schema:

0 = kein Bewuchs
1 = 1 - 10 Keime (sehr geringes Wachstum)
2 = 11 - 100 Keine (geringes Wachstum)
3 = über 100 Keime, aber noch nicht geschlossen bewachsen
4 = geschlossenes Flächenwachstum

Die Ergebnisse sind in der folgenden Tabelle zusammengefaßt:

| Konservierungsmittel | Konzentration in % | Anzahl der Beimpfungen | | | |
| --- | --- | --- | --- | --- | --- |
| | | 0 | 1 | 2 | 3 |
| Gemäß Beispiel 1 (9,3% BIT 2,1% 1-Dodecyl-1,5-diazahexan-6-carbonsäure) | 0,06 | 0 | 1 | 3 | 4 |
| Gemäß Beispiel 1 (9,3% BIT 2,1% 1-Dodecyl-1,5-diazahexan-6-carbonsäure) | 0,08 | 0 | 1 | 2 | 3 |
| Gemäß Beispiel 1 (9,3% BIT 2,1% 1-Dodecyl-1,5-diazahexan-6-carbonsäure) | 0,10 | 0 | 0 | 1 | 1 |
| Gemäß Beispiel 1 (9,3% BIT 2,1% 1-Dodecyl-1,5-diazahexan-6-carbonsäure) | 0,12 | 0 | 0 | 0 | 0 |
| Gemäß Beispiel 1 (9,3% BIT 2,1% 1-Dodecyl-1,5-diazahexan-6-carbonsäure) | 0,15 | 0 | 0 | 0 | 0 |
| Vergleichsbeispiel (11,4% BIT 73 % Dipropylenglykol Rest Wasser, Natriumhydroxid) | 0,10 | 0 | 2 | 4 | 4 |
| Vergleichsbeispiel (11,4% BIT 73 % Dipropylenglykol Rest Wasser, Natriumhydroxid) | 0,20 | 0 | 2 | 2 | 2 |
| Blindprobe ohne Konservierungsmittel | --- | 0 | 4 | 4 | 4 |

Beispiel 14:

Dieses Beispiel zeigt die Wirksamkeit eines erfindungsgemäßen Konservierungsmittels zur Konservierung einer Styrolacrylatdispersion (pH-Wert 8,9).

Die Prüfung erfolgte wie im Beispiel 13 beschrieben, die Ergebnisse sind in der folgenden Tabelle zusammengefaßt:

| Konservierungsmittel | Konzentration in % | Anzahl der Beimpfungen | | | |
| --- | --- | --- | --- | --- | --- |
| | | 0 | 1 | 2 | 3 |
| Gemäß Beispiel 1 (9,3% BIT 2,1% 1-Dodecyl-1,5-diazahexan-6-carbonsäure) | 0,10 | 0 | 0 | 0 | 0 |
| Gemäß Beispiel 1 (9,3% BIT 2,1% 1-Dodecyl-1,5-diazahexan-6-carbonsäure) | 0,20 | 0 | 0 | 0 | 0 |
| Vergleichsbeispiel (Mergal® K 9 N handelsübliches Konservierungsmittel auf Basis 5-Chlor-2-methylisothiazolin-3-on) | 0,20 | 0 | 0 | 2 | 2 |
| Blindprobe ohne Konservierungsmittel | --- | 2 | 4 | 4 | 4 |

Beispiel 15:

Dieses Beispiel zeigt die Wirksamkeit eines erfindungsgemäßen Konservierungsmittels zur Konservierung eines Betonverflüssigers (pH-Wert 9,8).

Die Prüfung erfolgte wie im Beispiel 13 beschrieben, die Ergebnisse sind in der folgenden Tabelle zusammengefaßt:

| Konservierungsmittel | Konzentration in % | Anzahl der Beimpfungen | | | |
|---|---|---|---|---|---|
| | | 0 | 1 | 2 | 3 |
| Gemäß Beispiel 1 (9,3% BIT 2,1% 1-Dodecyl-1,5-diazahexan-6-carbonsäure) | 0,10 | 0 | 0 | 0 | 0 |
| Gemäß Beispiel 1 (9,3% BIT 2,1% 1-Dodecyl-1,5-diazahexan-6-carbonsäure) | 0,20 | 0 | 0 | 0 | 0 |
| Vergleichsbeispiel ( 9,3 % BIT 65,0 % 1,3,5-Trishydroxyethyl-hexahydrotriazin Rest Wasser, Natriumhydroxid) | 0,10 | 1 | 1 | 1 | 3 |
| Vergleichsbeispiel ( 9,3 % BIT 65 % 1,3,5-Trishydroxyethyl-hexahydrotriazin Rest Wasser, Natriumhydroxid) | 0,20 | 0 | 0 | 0 | 2 |
| Blindprobe ohne Konservierungsmittel | --- | 4 | 4 | 4 | 4 |

## Patentansprüche

1. Flüssiges Konservierungsmittel insbesondere für Kunststoffdispersionen und daraus hergestellte Folgeprodukte, enthaltend
   a) als Komponente A 1 bis 24,5 Gew.% 1,2-Benzisothiazolin-3-on oder ein Salz dieser Verbindung,
   b) als Komponente B 0,1 bis 7 Gew.% eines Alkyl(polyaminoalkyl)glycins der Formel I:
   $$R\text{-}(NH\text{-}(CH_2)_n)_m\text{-}NH\text{-}CH_2\text{-}COOH \qquad (I)$$
   und/oder der Formel II:

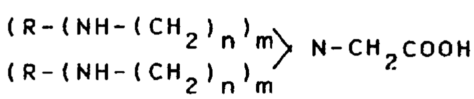

(II)

und/oder der Formel III

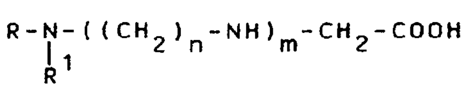

(III)

und/oder ein Salz einer der Verbindungen I, II oder III, gelöst in Wasser oder in mindestens einem mit Wasser mischbaren Lösemittel oder in einem Gemisch aus Wasser und mindestens einem mit Wasser mischbaren Lösemittel, wobei das Gewichtsverhältnis A : B = (3,5 bis 100) : 1 beträgt und

R = $C_8$ bis $C_{18}$-Alkyl,
$R^1$ = $((CH_2)_n\text{-}NH)_m\text{-}(CH_2)_n\text{-}NH_2$,
n = 2, 3 oder 4,
m = 1, 2, 3, 4 oder 5
bedeuten.

**2.** Konservierungsmittel nach Anspruch 1 gekennzeichnet durch einen alkalischen pH-Wert.

**3.** Konservierungsmittel nach Anspruch 1 und/oder 2 gekennzeichnet durch einen pH-Wert von 8 bis 13,5, vorzugsweise von 9 bis 10,5.

**4.** Konservierungsmittel nach einem oder mehreren der Ansprüche 1 bis 3, dadurch gekennzeichnet, daß in den in Anspruch 1 angegebenen Formeln I bis III R einen $C_{10}$ bis $C_{14}$Alkylrest und/oder n = 2 oder 3 und-/oder m = 1 oder 2 bedeutet.

**5.** Konservierungsmittel nach einem oder mehreren der Ansprüche 1 bis 4, dadurch gekennzeichnet, daß es als Komponente B eine Verbindung der im Anspruch 1 angegebenen Formel I enthält, worin n = 3 und vorzugsweise m = 1 bedeutet.

**6.** Konservierungsmittel nach einem oder mehreren der Ansprüche 1 bis 5, gekennzeichnet durch ein Gewichtsverhältnis A : B = (3,8 bis 10) : 1.

**7.** Konservierungsmittel nach einem oder mehreren der Ansprüche 1 bis 6, dadurch gekennzeichnet, daß es als ein mit Wasser mischbares Lösungsmittel ein glykolisches Lösemittel der Formel IV

$$R^2\text{ - X - }R^3 \qquad \text{(IV)}$$

enthält, worin
X den Rest der Formel

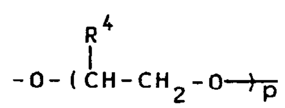

oder
den über zwei Sauerstoffatome gebundenen Rest eines Polyethylenglykol-polypropylenglykolkondensats,
$R^2$, $R^3$ unabhängig voneinander Wasserstoff, $C_1$-$C_{18}$-Alkyl, den Acylrest einer $C_1$-$C_4$-Carbonsäure oder ($C_1$-$C_{10}$)Alkyl-phenyl,
$R^4$ Wasserstoff oder Methyl,
p eine Zahl von 1 bis 13, vorzugsweise 1 bis 10, bedeuten.

**8.** Konservierungsmittel nach einem oder mehreren der Ansprüche 1 bis 7, gekennzeichnet durch 5 bis 15 Gew.% der Komponente A, 1 bis 3,9 Gew.% der Komponente B, wobei das Gewichtsverhältnis A : B = (3,8 bis 10) : 1 beträgt, und 65 bis 75 Gew.% eines glykolischen Lösungsmittels, 5 bis 20 Gew.% Wasser und einem pH Wert von 9 bis 10,5.

**9.** Verfahren zur Herstellung des in einem oder mehreren der Ansprüche 1 bis 8 angegebenen Konservierungsmittels, dadurch gekennzeichnet, daß 1,2-Benzisothiazolin-3-on oder ein Salz dieser Verbindung, und ein Alkyl(polyaminoalkyl)glyzin der in Anspruch 1 angegebenen Formeln I bis III oder ein Salz einer dieses Verbindungen in Wasser oder in einem mit Wasser mischbaren Lösemittel oder Lösemittelgemisch oder in einem Gemisch aus Wasser und einem oder mehreren mit Wasser mischbaren Lösemitteln in solchen Mengenverhältnissen aufgelöst werden und der pH-Wert mit einer oder mehreren Basen alkalisch, insbesondere auf pH 8 bis 13,5, vorzugsweise 9 bis 10,5, eingestellt wird, daß die in Anspruch 1 angegebenen Gewichtsanteile und Gewichtsverhältnisse erhalten werden.

**10.** Verfahren zur Konservierung technischer Produkte, insbesondere alkalisch eingestellter Kunststoffdispersionen und daraus hergestellter Folgeprodukte, dadurch gekennzeichnet, daß dem Produkt ein Konservierungsmittel nach einem oder mehreren der Ansprüche 1 bis 8 in einer Konzentration von 0,002 bis 0,11 Gew.%, vorzugsweise von 0,006 bis 0,065 Gew.%, bezogen auf die Summe der Aktivsubstanzen A und

B zugesetzt wird.

## Claims

1. Liquid preservative, in particular for plastics dispersions and secondary products prepared therefrom, containing
   a) as component A, 1 to 24.5% by weight of 1,2-benzisothiazolin-3-one or a salt of this compound,
   b) as component B, 0.1 to 7% by weight of an alkyl(polyaminoalkyl)glycine of the formula I:

$$R\text{-}(NH\text{-}(CH_2)_n)_m\text{-}NH\text{-}CH_2\text{-}COOH \qquad (I)$$

   and/or of the formula II:

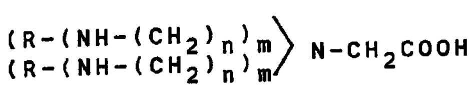

(II)

   and/or of the formula III

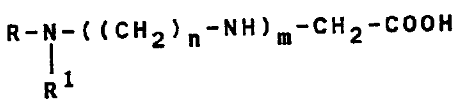

(III)

   and/or a salt of one of the compounds I, II or III, dissolved in water or in at least one water-miscible solvent or in a mixture of water and at least one water miscible solvent, wherein the weight ratio of A : B = (3.5 to 100) : 1 and

   | | |
   |---|---|
   | R | denotes $C_8$ to $C_{18}$-alkyl |
   | $R^1$ | denotes $((CH_2)_n\text{-}NH)_m\text{-}(CH_2)_n\text{-}NH_2$, |
   | n | denotes 2, 3 or 4 and |
   | m | denotes 1, 2, 3, 4 and 5. |

2. Preservative according to Claim 1, characterized by an alkaline pH.

3. Preservative according to Claim 1 and/or 2, characterized by a pH of 8 to 13.5, preferably 9 to 10.5.

4. Preservative according to one or more of Claims 1 to 3, characterized in that in the formulae I to III given in Claim 1, R denotes a $C_{10}$ to $C_{14}$-alkyl radical and/or n denotes 2 or 3 and/or m denotes 1 or 2.

5. Preservative according to one or more of Claims 1 to 4, characterized in that it contains, as component B, a compound of the formula I given in Claim 1 wherein n denotes 3 and, preferably, m denotes 1.

6. Preservative according to one or more of Claims 1 to 5, characterized by a weight ratio of A : B of (3.8 to 10) : 1.

7. Preservative according to one or more of Claims 1 to 6, characterized in that it contains, as a water-miscible solvent, a glycolic solvent of the formula IV

$$R^2 - X - R^3 \qquad (IV)$$

   wherein
   X denotes the radical of the formula

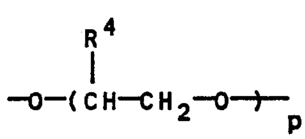

   the radical, bonded via two oxygen atoms, of a polyethylene glycol-polypropylene glycol condensation product,
   $R^2$ and $R^3$ independently of one another denote hydrogen, $C_1$-$C_{18}$-alkyl, the acyl radical of a $C_1$-$C_4$-car-

boxylic acid or ($C_1$-$C_{10}$)-alkyl-phenyl,
$R^4$ denotes hydrogen or methyl and
p denotes a number from 1 to 13, preferably 1 to 10.

8. Preservative according to one or more of Claims 1 to 7, characterized by 5 to 15% by weight of component A, 1 to 3.9% by weight of component B, the weight ratio of A:B being (3.8 to 10) : 1, and 65 to 75 % by weight of a glycolic solvent, 5 to 20% by weight of water and a pH of 9 to 10.5.

9. Process for the preparation of the preservative described in one or more of Claims 1 to 8, characterized in that 1,2-benzisothiazolin-3-one or a salt of this compound and an alkyl(polyaminoalkyl)glycine of the formulae I to III given in Claim 1 or a salt of one of these compounds are dissolved in water or in a water-miscible solvent or solvent mixture or in an mixture of water and one or more water-miscible solvents, and the pH is adjusted to the alkaline range, in particular to pH 8 to 13.5, preferably 9 to 10.5, with one or more bases, in amounts such that the amounts by weight and weight ratios given in Claim 1 are obtained.

10. Process for preserving industrial products, in particular alkaline plastics dispersions and secondary products prepared therefrom, characterized in that a preservative according to one or more of Claims 1 to 8 is added to the product in a concentration of 0.002 to 0.11% by weight, preferably 0.006 to 0.065% by weight, based on the sum of active substances A and B.

## Revendications

1. Agent de conservation liquide, en particulier pour des dispersions de matières plastiques et les produits que l'on en fabrique, agent qui comprend :
   a) comme composant A de 1 à 24,5% en poids de 1,2-benzisothiazoline -3-one ou d'un sel de ce composé, et
   b) comme composant B de 0,1 à 7% en poids d'une alkyl(polyaminoalkyl)-glycine de formule I :

   $$R\text{-}(NH\text{-}(CH_2)_n)_m\text{-}NH\text{-}CH_2\text{-}COOH \quad (I)$$

   et/ou de formule II :

   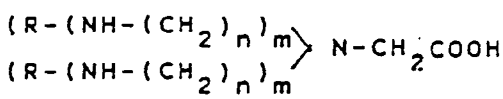

   (II)

   et/ou de formule III :

   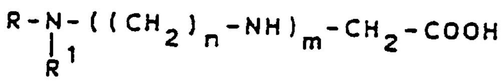

   (III)

   et/ou d'un sel de l'un de ces composés I, II et III, en solution dans de l'eau ou dans un ou plusieurs solvants miscibles à l'eau ou encore dans un mélange d'eau et d'un ou plusieurs solvants miscibles à l'eau, le rapport pondéral A:B étant compris entre 3,5 et 100, et dans les formules ci-dessus
   R désigne un alkyle en C8 à C18,
   $R^1$ un groupe $((CH_2)n\text{-}NH)m\text{-}(CH_2)n\text{-}NH_2$,
   n le nombre 2, 3 ou 4 et
   m le nombre 1, 2, 3, 4 ou 5.

2. Agent de conservation selon la revendication 1, caractérisé par un pH alcalin.

3. Agent de conservation selon la revendication 1 et/ou 2, caractérisé par un pH de 8 à 13,5, de préférence de 9 à 10,5.

4. Agent selon une ou plusieurs des revendications 1 à 3, caractérisé en ce que dans les formules I à III de la revendication 1, R est un alkyle en C10 à C14 et/ou n est le nombre 2 ou 3 et/ou m le nombre 1 ou 2.

5. Agent selon une ou plusieurs des revendications 1 à 4, caractérisé en ce qu'il comprend comme composant B un composé de la formule I de la revendication 1 dans lequel n est le nombre 3 et m de préférence le nombre 1.

6. Agent selon une ou plusieurs des revendications 1 à 5, caractérisé par un rapport pondéral A:B compris entre 3,8 et 10.

7. Agent selon une ou plusieurs des revendications 1 à 6, caractérisé en ce qu'il comprend comme solvant miscile à l'eau un solvant glycolique de formule IV :

$$R^2 - X - R^3 \qquad (IV)$$

dans laquelle

X représente un radical :

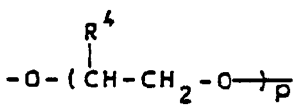

ou le radical d'un produit de condensation polyéthylèneglycol-polypropylène-glycol lié par deux atomes d'oxygène, et

$R^2$ et $R^3$ représentent chacun, indépendamment l'un de l'autre, l'hydrogène, un alkyle en $C_1$-$C_{18}$, le radical acyle d'un acide carboxylique en $C_1$-$C_4$ ou un ($C_1$-$C_{10}$)-alkyl-phényle,

$R_4$ désignant l'hydrogène ou le groupe méthyle, et

p un nombre de 1 à 13, de préférence de 1 à 10.

8. Agent de conservation selon une ou plusieurs des revendications 1 à 7, caractérisé par une teneur de 5 à 15% en poids en composant A, de 1 à 3,9% en poids en composant B, le rapport pondéral A:B étant compris entre 3,8 et 10, de 65 à 75% en poids d'un solvant glycolique et de 5 à 20% en poids d'eau, et par un pH de 9 à 10,5.

9. Procédé de préparation d'un agent de conservation selon une ou plusieurs des revendications 1 à 8 précédentes, procédé caractérisé en ce que l'on dissout de la 1,2-bensizothiazoline-3-one ou un sel de celle-ci et une alkyl-(polyaminoalkyl)-glycine des formules I à III de la revendication 1 ou un sel de l'un de ces composés dans de l'eau ou dans un solvant miscible à l'eau ou un mélange de tels solvants ou encore dans un mélange d'eau et d'un ou plusieurs solvants miscibles à l'eau, dans des proportions telles, et en réglant le pH de la solution à une valeur alcaline avec une ou plusieurs bases, en particulier entre 8 et 13,5 et de préférence entre 9 et 10,5, que l'on ait les proportions pondérales et les rapports pondéraux qui sont indiques la revendication 1.

10. Procédé pour conserver des produits industriels, en particulier des dispersions de matières plastiques alcalines et les produits que l'on en fabrique, procédé caractérisé en ce que l'on ajoute au produit un agent de conservation selon une ou plusieurs des revendications 1 à 8 à une concentration de 0,002 à 0,11% en poids, de préférence de 0,006 à 0,065%, du poids total des substances actives A et B.